# EUROPEAN PATENT APPLICATION

(11) **EP 1 708 080 A1**
(43) Date of publication of application: **04.10.2006**
(21) Application number: 06111980.6
(22) Date of filing: 30.03.2006
(51) Int. Cl.: G06F 5/10

(54) **Configurable length first-in first-out memory**

(30) Priority: 31.03.2005 IN DE07082005
(71) Applicant: STMicroelectronics Pvt. Ltd, Noida-201 301, Uttar Pradesh (IN)
(72) Inventor: Bahl, Swapnil, 110044, New Delhi (IN); Singh, Balwant, 201305, Greater Noida, Uttar Pradesh (IN)
(74) Representative: Cerbaro, Elena

(57) **Abstract**

The present invention provides a configurable length First-in First-out memory comprising a memory core for storing the data; a write address counter connected to said memory core for counting the locations for writing the data; and a read address counter connected to said memory core for counting the locations for reading the data wherein said read address counter includes a comparator for generating synchronous reset for said read address counter and a selection means connected to said comparator for selecting user defined FIFO length or pre-programmed write address counter length.

## Description

### Field of the Invention

This invention relates a to configurable length First-in First-out memory.

### Background of the Invention

Memories are an integral part of a System on Chip (SoC). Different types of memories are preferred based on the application and the intended use. First-In First-Out (FIFOs) memories are the most commonly used memories in memory-dominated architecture of SoC devices. Unlike other memories, FIFOs have no address buses to retrieve data from a particular address. These memories have separate read and write address counters, which increment themselves on each read and write operation respectively. These counters reset themselves to first address on reaching the last address in the FIFO. Hence, FIFOs occupy less space in comparison to conventional memories due to lack of address generation mechanism and address buses. They are extensively used in devices where data retrieval is required in a fixed order.

FIFO memory chips are used in buffering applications between devices that operate at different speeds, or in applications where data must be stored temporarily for further processing. Typically, this type of buffering is used to increase bandwidth and to prevent data loss during high-speed communications. As the term FIFO implies, data is released from the buffer in the order of its arrival. Some FIFO memory reads with one clock and writes with another simultaneously. Synchronous operations require a clock, but asynchronous operations do not. Flow control generates full and empty signals so that inputs do not overwrite the contents of the buffer. Depending on the device, FIFO memory can be unidirectional or bidirectional. FIFO memory can also include parallel inputs and outputs as well as programmable flags.

FIFO is commonly used for storage of code for programmable devices that execute a set of operations on multiple blocks/locations. For instance, a programmable Built-in Self Test (BIST) executes a sequence of operations on all memory locations. By maintaining the code sequence of memory operations in a FIFO, BIST reads the FIFO for the code and executes the operations. If the number of operations is equal to the FIFO length, then BIST does not reset FIFO after all the operations have been executed on one location as FIFO resets its address counter to the first location. But if the FIFO length is not equal to the number of operations, the BIST keeps track of the number of operations executed and resets the FIFO address counter accordingly. This leads to a significant hardware overhead for control circuitry in the BIST and also slows down the BIST speed. Additionally, after the execution of last operation on a location, BIST needs the first operation to execute on next location in the next clock. This means that the FIFO counters are reset before the next clock cycle. Hence designer has to work his synchronous design on negative edge as well, which is generally undesirable and is not supported by many design tools.

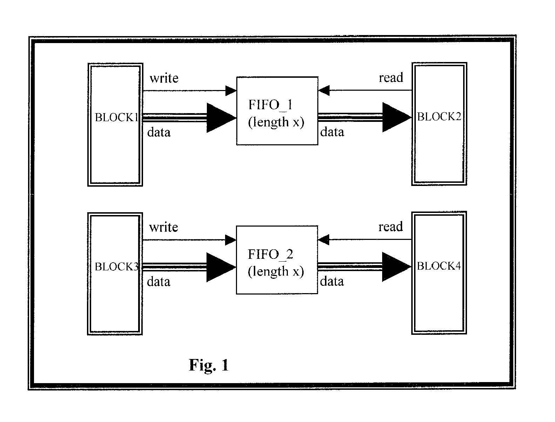

The prior art architecture is illustrated in Figure 1. Each data source (Block1 and Block 3) and their associated data receiver (Block 2 and Block 4) have a dedicated FIFO (FIFO 1 and FIFO 2) regardless of the FIFO length and the operation mode. This leads to existence of redundant FIFO memories and consequent waste of silicon area.

Prior art patent US 06651201 B1 is an example of architecture with fixed length FIFO. This patent describes a BIST wherein the BIST controller has a dedicated in-built micro-code storage means (a FIFO). According to the patent, the micro-code storage means is the largest contributor to area overhead due to the presence of BIST on a chip. Hence, a variable length FIFO, which may be shared between several blocks, is highly desirable in such instances to reduce the silicon area.

Hence it is desirable to have a particular length FIFO in BISTs and many other blocks on a SoC. It is seen that dedicated FIFOs of different lengths are used for different blocks on a chip resulting in extra silicon area overhead. One solution to the problem is sharing the FIFOs between blocks that require equal length FIFOs. However, this sharing may not be possible where parallel execution is required for the FIFO sharing blocks. In addition to area overhead, the presence of multiple FIFOs significantly slows down the design process. Time taken in design process from generating the FIFO code to layout of the chip is several weeks. As the FIFO may have to be varied for a different code, the design process has to be repeated resulting in unnecessary slowdown of the design process.

Hence, there is a need for an improved FIFO that will reduce the number of FIFOs required on a chip. Moreover, there is a need for a FIFO that may not require significant control circuitry to perform the FIFO counter resetting. Additionally, the instant invention should solve the negative edge clock problem mentioned above and reduce the design cycle time. The present invention relates to an improved FIFO of variable length, which can be configured to a required length and shared between various blocks on a chip.

### Object and Summary of the Invention

To obviate the drawbacks of the prior art the object of the instant invention is to provide FIFO memories with configurable length to reduce the control circuitry required for external pointer update.

Another object of the invention is to reduce the required silicon area on a chip by sharing FIFOs amongst the blocks.

Yet another object of the present invention is to provide fast delivery of a chip design in case of change in required length for FIFOs on a chip.

To achieve the aforesaid objects the instant invention provides a configurable length First-in First-out memory comprising:
- a memory core for storing the data;
- a write address counter connected to said memory core for counting the locations for writing the data; and
- a read address counter connected to said memory core for counting the locations for reading the data wherein said read address counter includes a comparator for generating synchronous reset for said read address counter and a selection means connected to said comparator for selecting user defined FIFO length or pre-programmed write address counter length.

The said memory core comprises of memory cells or flip-flops.

The said comparator generates an active high signal as soon as read address counter equals said user defined FIFO length or pre-programmed write address counter length.

The said read address counter synchronously resets to the initial address location on generation of active high signal by said comparator.

The said selection means is a multiplexer.

The present invention further provides a method for configuring the length of a First-in First-out memory comprising the steps of:
- providing a memory core;
- counting the locations for writing the data;
- counting the locations for reading the data
wherein
- selecting between user defined FIFO length or pre-programmed write address counter length;
- comparing the read address counter
- value to user defined FIFO length or pre-programmed write address counter length;
- generating a synchronous reset signal on reaching said user defined FIFO length or pre-programmed write address counter length; and
- resetting said read address counter to initial address on receiving said synchronous reset signal.

The present invention solves the problem of extra control circuitry for pointer updates, negative edge clocking problem and the design process slowdown problem by introducing variable length FIFOs on a chip. By sharing the FIFOs amongst blocks on a chip, the instant invention reduces the number of FIFOs required on a chip to maximum required parallel operations on a chip and subsequently reduces the silicon area for a design.

### Brief Description for the Accompanying Drawings

The invention will now be described with reference to the accompanying drawings.
Fig. 1 shows prior art in the related fields.
Fig. 2 shows the block diagram in accordance with the invention.
Fig. 3 shows the block diagram of additional circuitry for read counter resetting.
Figure 4 and Figure 5 show the area and timing comparisons of the instant invention with the prior art.

### Detailed Description of the Invention

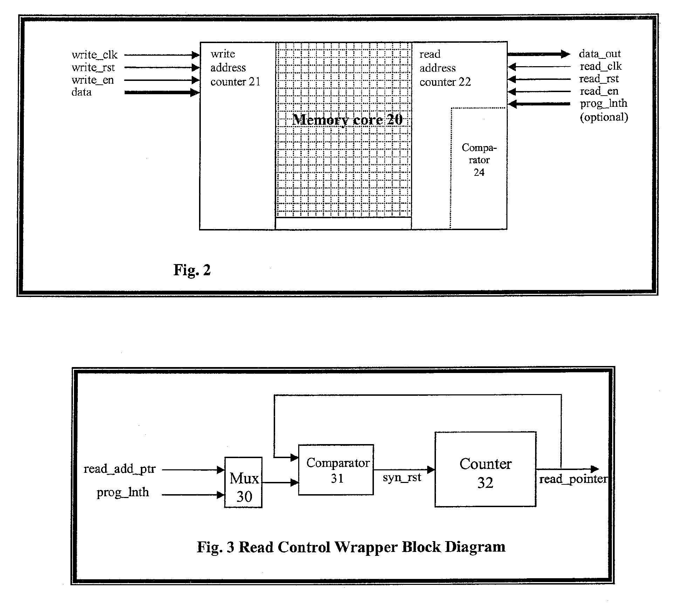

The present invention relates to the configurable length First-in First-out (FIFO) memories. The architecture of the proposed configurable length FIFO is illustrated in Figure 2. The architecture comprises of four blocks namely, a memory core 20, a write address counter 21, a read address counter 22 and an additional circuitry for configuring the FIFO length and resetting the counter.

Memory core 20 is a general-purpose storage device which is a collection of memory storage cells that may be flip-flops or other storage means. The outputs of the address counters 21 & 22 are connected to the memory core 20 and are used to point to a particular address in a memory. These counters 21 & 22 may count in an algebraic increment/decrement direction, gray code or any other way. Initially, the value of the read/write address counter 22 / 21 is set to a starting value which points to the first address location in the memory core. After each read/write operation, the counter is incremented/decremented until the last value on the counter is reached. The width of write and read address counters 21 & 22 is log2 (max number of locations of memory core). After reaching the last value, the counter resets to the starting value. This means that after read/write operation on the last address location, the operation is performed on the first address location in the memory core. Hence, it is clear that the memory core 20 in association with simple address counters forms a FIFO memory.

The present invention provides a modified FIFO memory with additional circuitry associated with the read address counter 22 explained in figure 3. Write address counter 21 is a simple address counter whose operation is not affected by the presence of additional circuitry. If the write enable pin is active, it counts address locations from initial to final address as write operations are performed. Like any other counter, if the enable pin is deactivated, the output write_add_ptr is set to the current value in the counter until it is reset. The read address counter 22 counts in a similar way as write address counter 21 when read enable pin is active. The additional circuitry is used to synchronously reset the read address counter 22 to starting value when the read address counter 22 value reaches the user defined FIFO length. The additional circuitry is also used to define the number of memory locations to read from in a memory core.

Figure 3 illustrates the block diagram for a read address counter in association with additional circuitry. The modified circuitry comprises a multiplexer 30 and a comparator 31 in association with the read address counter 32. The multiplexer 30 receives two input signals write_add_ptr and prog_lnth and selects one signal based on user provided external control signal. The output of the multiplexer 30 is connected to one of the input nodes of the comparator 31. The output of comparator 31 is used as a control signal for the read address counter 32. The output of the read address counter 32 is fed back as the other input for the comparator 31.

The modified circuitry is used to synchronously reset the read address counter to starting value when the read address counter value reaches the user defined FIFO length. The additional circuitry is also used to define the number of memory locations to read in a memory core. Comparator 31 compares two inputs and produces a high on output pin, comp_result, when the two inputs are bit-wise same. This comp_result output is used as input to the reset pin on the read address counter and hence when comp_result is high, the counter is reset. There are two possible comparator inputs that may be used to generate the comp_result output. One of the inputs to the comparator 31 is always the read address counter output that is updated after each read operation. The second input to the comparator 31 maybe a user configured FIFO length Prog_lnth received through input pins or the write address counter output write_addr_ptr. A multiplexer 30 is used to select between the two possible inputs to the comparator 31. This gives the user an option for selecting between user-defined length or using the pre programmed write address counter value as the length for FIFO memory.

Generally SoC's have many programmable devices that need operations in terms of micro-codes, which are stored in FIFO memories. These codes are applied on different locations/blocks. After performing all the operation on a location, FIFO is reset to first location and operations are performed on next location. As FIFO can be configured for different lengths, the same FIFO can be shared between different blocks requiring different size memories.

The proposed architecture is also very useful for storing codes for programmable BIST. BIST applies the patterns on all the memory locations without any clock delay. After the last operation on any location, BIST needs to apply first operation on the next location on the next clock edge. The proposed programmable FIFO solves this problem because it resets itself to first location after reaching the last operation location irrespective of last physical location of FIFO. Hence, there is no need of resetting FIFO on negative clock edges.

The proposed method is also useful in generating fast delivery of FIFO IPs. User only needs to generate few FIFO instances of different lengths. The programmable length pins are available as input pins. If a customer needs a FIFO with different length, then the FIFO provider will choose from available FIFO instances, an instance of length just higher than required and configure its length by shorting the input pins, Prog_lnth, with power pins i.e. vdd and gnd pins. For example if layouts of instances of length 2,4,8 and 12 are available and customer requires of FIFO instance of length 10. The provider will take instance of length 12 and configure the pins Prog_lnth[3:0] as 1010 by connecting Prog_lnth[3] & [1] pins to vdd and Prog_lnth[2] & [0] to gnd permanently. The method has disadvantage in terms of area but generates layouts in hours as compared to weeks.

### Results

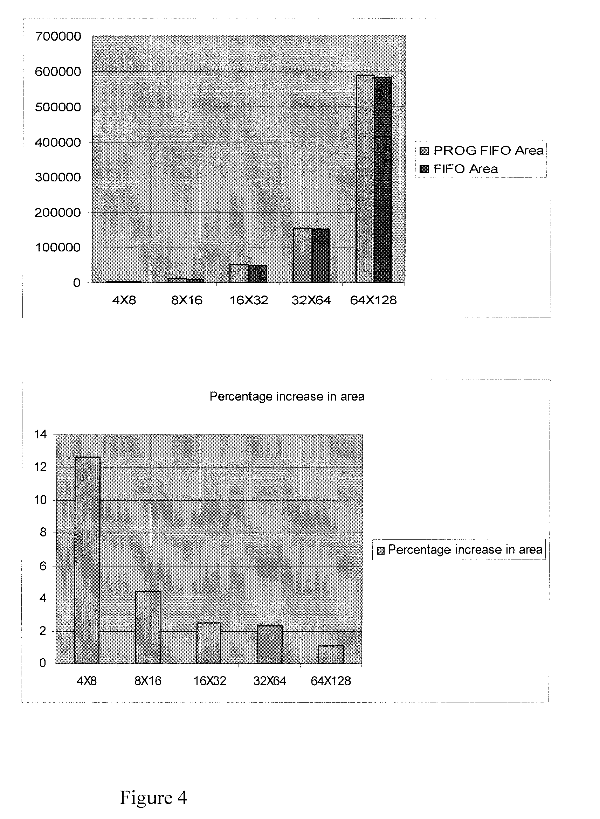

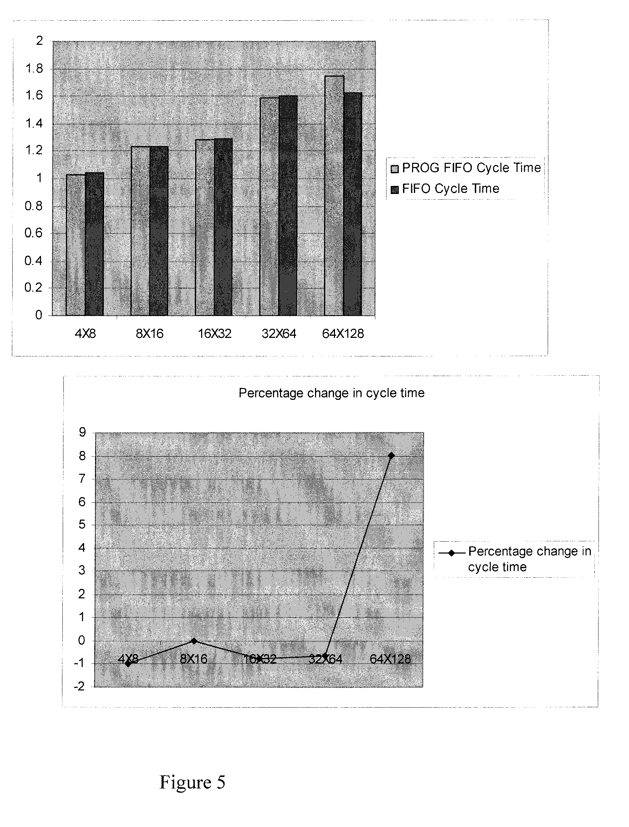

The area and timing comparisons are shown in Figure 4 and Figure 5. It is observed that the percentage increase in area decreases as FIFO memory size increases. Timing does not show much difference in both the cases except for the 64X128 cut where the cycle time increases by 8%.

The Programmable FIFO can be used for storing mico-codes of programmable devices, which need to run operations on a number of locations/blocks. It can be used for storing the codes of programmable BIST. There is no need of generating reset on negative clocks. It can be shared between different blocks. A single programmable FIFO can replace multiple FIFO instances of different lengths, not used in parallel, as the length can be programmed. It can be used as a normal FIFO. There is no need for resetting the read address counter as it resets after reading all the valid data irrespective of the length of FIFO. Further it can be used as a FIFO any length less than the length of the FIFO and can be used for fast generating a FIFO instance of any length less than the length of the available programmable FIFO.

## Claims

1. A configurable length First-in First-out memory comprising:
- a memory core for storing the data;
- a write address counter connected to said memory core for counting the locations for writing the data; and
- a read address counter connected to said memory core for counting the locations for reading the data wherein said read address counter includes a comparator for generating synchronous reset for said read address counter and a selection means connected to said comparator for selecting user defined FIFO length or pre-programmed write address counter length.

2. A configurable length First-in First-out memory as claimed in claim 1 wherein said memory core comprises of memory cells or flip-flops.

3. A configurable length First-in First-out memory as claimed in claim 1 wherein said comparator generates an active high signal as soon as read address counter equals said user defined FIFO length or pre-programmed write address counter length.

4. A configurable length First-in First-out memory as claimed in claim 1 wherein said read address counter synchronously resets to the initial address location on generation of active high signal by said comparator.

5. A configurable length First-in First-out memory as claimed in claim 2 wherein said selection means is a multiplexer.

6. A method for configuring the length of a First-in First-out memory comprising the steps of:
- providing a memory core;
- counting the locations for writing the data;
- counting the locations for reading the data
wherein
- selecting between user defined FIFO length or pre-programmed write address counter length;
- comparing the read address counter
- value to user defined FIFO length or pre-programmed write address counter length;
- generating a synchronous reset signal on reaching said user defined FIFO length or pre-programmed write address counter length; and
- resetting said read address counter to initial address on receiving said synchronous reset signal.
